# EUROPÄISCHE PATENTSCHRIFT

(11) **EP 1 729 406 B1**
(45) Veröffentlichungstag und Bekanntmachung des Hinweises auf die Patenterteilung: **08.10.2008**
(21) Anmeldenummer: 05011816.5
(22) Anmeldetag: 01.06.2005
(51) Int. Cl.: H02P 7/29, H02M 3/158

(54) **Steuereinrichtung für einen Gleichstromelektromotor eines Elektrowerkzeuggeräts**
Control circuit for a DC motor in a power tool
Circuit de commande pour un moteur à courant continu dans un outil électrique

(43) Veröffentlichungstag der Anmeldung: 06.12.2006
(73) Patentinhaber: Metabowerke GmbH, 72622 Nürtingen (DE)
(72) Erfinder: Wiesner, Bernd, Dipl.-Ing. (FH), 73277 Owen (DE)
(74) Vertreter: Friz, Oliver

(56) Entgegenhaltungen:
- DE-A1- 4 018 930
- US-A1- 2004 124 817
- MITTER C S: "Device considerations for high current, low voltage synchronous buck regulators (SBR)" WESCON/97. CONFERENCE PROCEEDINGS SANTA CLARA, CA, USA 4-6 NOV. 1997, NEW YORK, NY, USA,IEEE, US, 4. November 1997 (1997-11-04), Seiten 281-288, XP010254396 ISBN: 0-7803-4303-4
- ANONYMOUS: "Synchronous-Buck Mofset Drivers with Drive Regulator" INTERNETARTICLE, TEXAS INSTRUMENTS, [Online] XP002349364 Gefunden im Internet: URL:http://focus.ti.com/lit/ds/symlink/tps 2838.pdf>

## Beschreibung

Die Erfindung betrifft eine Steuereinrichtung für einen Gleichstromelektromotor eines Elektrowerkzeuggeräts, mit den Merkmalen des Oberbegriffs des Anspruchs 1.

Eine derartige Steuereinrichtung bzw. Elektrowerkzeuggeräte mit einer derartigen Steuereinrichtung für einen Gleichstromelektromotor sind beispielsweise aus DE-A 4 018 930, Figuren 1, 4 bekannt. Die Vorsehung von als Freilaufdioden geeigneten Dioden parallel zu dem Elektromotor als induktiver Last verhindert bei einer Pulsweitenmodulationsansteuerung das Auftreten von induzierten Spannungsspitzen infolge des Ausschaltens oder Öffnens des ersten Schalters zur Ansteuerung des Elektromotors. Solche Spannungsspitzen könnten nämlich die Leistungselektronik, insbesondere den hierfür verwandten ersten Schalter, beschädigen. Durch die Vorsehung einer Freilaufdiode kann der im Anker fließende Strom weiter fließen und abklingen, so dass es nicht zu Spannungsspitzen und deren unerwünschten Beeinträchtigung der Steuereinrichtung kommt.

Aus DE 36 29 186 A1 ist eine andere Steuereinrichtung für einen Gleichstromelektromotor bekannt, bei der eine Leistungsendstufe mit vier elektronischen Schaltern aufgebaut ist und insgesamt eine höhere Komplexität aufweist.

Ausgehend von einer bekannten Steuereinrichtung der eingangs genannten Art liegt der vorliegenden Erfindung die Aufgabe zugrunde, eine Verbesserung der Betriebsbedingungen, jedoch unter Beibehaltung eines verhältnismäßig einfachen Aufbaus und einer kostengünstigen Herstellbarkeit zu erreichen.

Diese Aufgabe wird durch eine Steuereinrichtung mit den Merkmalen des Anspruchs 1 gelöst.

Es wird also daran festgehalten, dass die an sich einfache Anordnung von Elektromotor als induktiver Last und hierzu parallel vorgesehener Freilaufdiode beibehalten wird, wobei durch den zusätzlich vorgesehenen zweiten Schalter ein einfach ansteuerbares und auf andere Komponenten abstimmbares Bauteil vorgesehen wird, mit dem die Verlustleistung während der Freilaufphase des Elektromotors als induktiver Last reduziert werden kann. Dadurch, dass der zweite Schalter erst nach einem Zeitintervall Δt₂ von insbesondere 100 bis 800 ns, insbesondere von 300 bis 700 ns, nach dem Öffnen (Ausschalten) des ersten Schalters geschlossen wird, wird im ersten Moment nach dem Öffnen des ersten Schalters der Freilaufstrom in an sich bekannter Weise über die Freilaufdiode geleitet. Es wird hierdurch ein Kurzschluss infolge einer endlichen Ausschaltzeit des ersten Schalters sicher verhindert. Nach dem genannten Zeitintervall wird dann aber der zweite Schalter geschlossen. Infolge des gegenüber der Freilaufdiode geringeren Widerstands fließt der überwiegende Freilaufstrom nicht durch die Diode, sondern durch den geschlossenen zweiten Schalter, wodurch insgesamt die Verlustleistung reduziert wird. Es wird weniger Wärme erzeugt, als wenn der Freilaufstrom während der Abschaltphasen des ersten Schalters über die Freilaufdiode fließt.

Um jedoch zu verhindern, dass der Freilaufstrom gegen Null geht und seine Richtung umkehrt, also ein Bremsmoment auf den Anker des Gleichstrommotors ausgeübt wird, wird die Steuerelektronik so ausgebildet ist, dass sie den zweiten Schalter bereits ein Zeitintervall Δt₄ vor dem Schließen des ersten Schalters wieder öffnet. Der zweite Schalter wird dabei durch die Steuerelektronik erfindungsgemäß so rechtzeitig wieder geöffnet, dass ein Absinken des Freilaufstroms auf Null verhindert wird. Das Zeitintervall Δt₄ liegt dabei zwischen 100 ns und dem Kehrwert der Frequenz der Pulsweitenmodulation (als theoretische obere Grenze, die aber aufgrund von Δt₁ bis Δt₃ nicht erreicht wird). Die Frequenz der Pulsweitenmodulation liegt hier vorteilhafterweise zwischen 2 und 8 kHz.

Bei dem zweiten Schalter handelt es sich in vorteilhafter Weise um einen MOSFET.

Des Weiteren wird Schutz beansprucht für ein Elektrowerkzeuggerät, insbesondere ein Elektrohandwerkzeuggerät mit einem Gleichstromelektromotor und einer erfindungsgemäßen Steuereinrichtung.

Auch wird Schutz beansprucht für ein Verfahren zum Ansteuern eines Gleichstromelektromotors eines Elektrowerkzeuggeräts mit den Merkmalen des Anspruchs 6.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Steuereinrichtung.

### In der Zeichnung zeigen:

- Figur 1: schematisch eine Schaltungseinrichtung einer erfindungsgemäßen Steuereinrichtung; und
- Figur 2: die Ansteuerung zweier Schalter und der Verlauf des Stroms durch den Gleichstromelektromotor unter Verwendung einer Steuereinrichtung nach Figur 1.

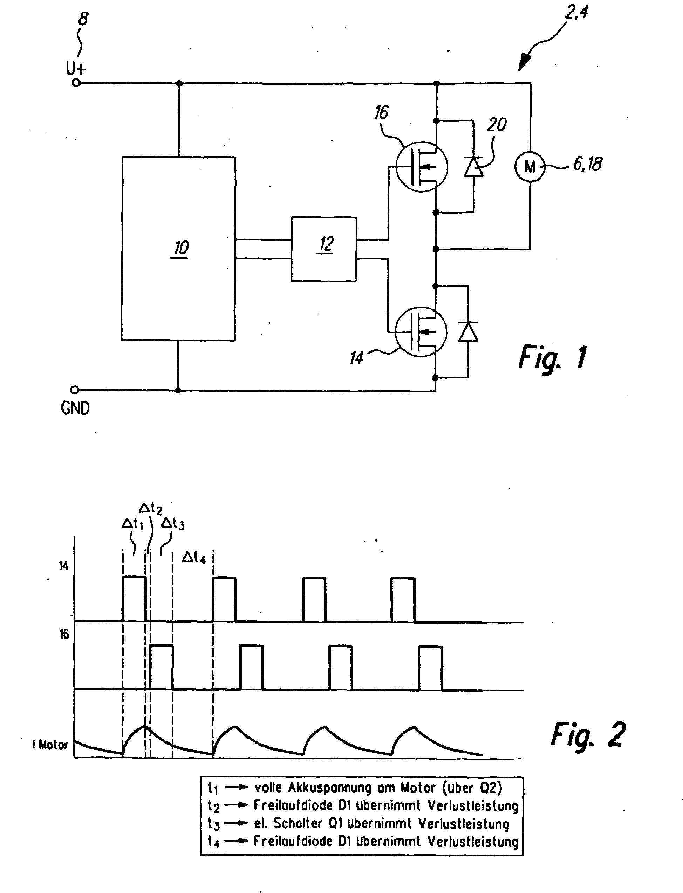

Figur 1 zeigt schematisch eine elektrische Schaltungsanordnung 2 einer erfindungsgemäßen Steuereinrichtung 4 für einen Gleichstromelektromotor 6 eines Elektrowerkzeuggeräts, insbesondere eines akkubetriebenen Elektrohandwerkzeuggeräts. Die mit U+ bzw. GND bezeichnete Gleichstromquelle 8, bei der es sich beispielsweise um einen Akkumulator handeln kann, kann eine an sich beliebige Spannung, insbesondere im Bereich 12 bis 24 V, insbesondere 18 V, aufweisen. Bei der Steuereinrichtung 4 ist mit dem Bezugszeichen 10 schematisch eine insbesondere auf einem Chip implementierte Ansteuerlogik bezeichnet und mit dem Bezugszeichen 12 eine elektronische Treibereinrichtung 12 (Ansteuerelektronik) zur Ansteuerung eines ersten Schalters 14 und eines zweiten Schalters 16, bei denen es sich um Transistoren handelt. Der erste Schalter 14 ist in Reihe zu dem Elektromotor 6, d. h. zu der Ankerwicklung 18 geschaltet, die einerseits mit dem positiven Potential der Spannungsquelle 8 verbunden ist. Wenn über die Ansteuerlogik 10 und die Treibereinrichtung 12 der erste Schalter 14 so angesteuert wird, dass er geschlossen ist, so liegt die Ankerwicklung 18 des Elektromotors 6 an dem vollen Potential der Gleichspannungsquelle 8. Unter Bezugnahme auf die Figur 2 ist dies der Zustand während des Zeitintervalls Δt₁. Während dieser Zeit ist der zweite Schalter 16 geöffnet.

Wenn nach Ablauf des Zeitintervalls Δt₁ die Ansteuerlogik 10 und die Treibereinrichtung 12 den ersten Schalter 14 schließen, so wird an der Ankerwicklung 18 eine Spannung induziert, welche ein Weiterfließen des Ankerstroms veranlassen möchte. Damit dies geschehen kann, ist parallel zu der Ankerwicklung 18 und auch parallel zu dem zweiten Schalter 16 eine Freilaufdiode 20 vorgesehen. Diese ist so orientiert, dass sie während des Zeitintervalls Δt₁ in Sperrrichtung betrieben wird. Während der jetzt beginnenden Abschaltphase Δt₂ wird die Diode 20 infolge der an der Ankerwicklung 18 induzierten Spannung in Durchlassrichtung betrieben, so dass der Strom in der Darstellung der Figur 1 im Uhrzeigersinn durch die Ankerwicklung 18 und die Freilaufdiode 20 (während der zweite Schalter 16 noch geöffnet ist) fließen kann und hierbei entsprechend der Darstellung in Figur 2 exponentiell abklingen kann.

Erfindungsgemäß ist die Ansteuerlogik 10 und die Treibereinrichtung 12 so ausgebildet, dass sie nach einem verhältnismäßig kurzen Zeitintervall Δt₂ von 100 bis 800 ns, insbesondere von 300 bis 700 ns, und vorzugsweise im Bereich von ca. 500 ns nach Öffnen des ersten Schalters 14 den zweiten Schalter 16 schließt. Der zweite Schalter 16 wird dann während des sich daran anschließenden Zeitintervalls Δt₃ den Freilaufstrom durchleiten, da sein Widerstand geringer ist als derjenige der Freilaufdiode 20. Es wird also insgesamt während der Freilaufphase eine geringere Verlustleistung produziert und weniger Wärme frei, als wenn der Freilaufstrom vollständig über die Freilaufdiode 20 geleitet würde.

Während der Freilaufphase klingt der Strom, wie bereits erwähnt, exponentiell ab. Der zweite Schalter 16 wird erst nach dem Zeitintervall Δt₂ geschlossen, um einen Kurzschluss zu vermeiden, der infolge einer endlichen Ausschaltzeit des ersten Schalters 14 auftreten könnte. Der zweite Schalter 16 wird auch deutlich vor dem erneuten Schließen des ersten Schalters 14 geöffnet, und zwar, um zu verhindern, dass der Freilaufstrom gegen Null geht und seine Richtung gar umgekehrt wird, was die Ausübung eines Bremsmoments auf den Anker des Elektromotors bedeuten würde. Während dieser Phase, die in Figur 2 mit dem Zeitintervall Δt₄ bezeichnet ist, erfolgt die Leitung des Freilaufstroms wieder vollständig über die Freilaufdiode 20, die so eine Umkehrung der Stromrichtung sicher verhindert.

Schließlich wird erneut der erste Schalter 14 geschlossen und somit wiederum die Spannung der Gleichspannungsquelle 8 an die Ankerwicklung 18 gelegt, so dass der Strom durch die Ankerwicklung 18 wieder einer induktiven Last folgend ansteigt (Δt₁).

## Patentansprüche

1. Steuereinrichtung (2) für einen Gleichstromelektromotor (6) eines Elektrowerkzeuggeräts, mit einer implementierten Ansteuerlogik (10) und einer Treibereinrichtung (12), die zur Durchführung einer Pulsweitenmodulation unter Verwendung eines den Gleichstrommotor als induktive Last ansteuernden ersten Schalters (14) ausgebildet sind, und mit einer zum Gleichstrommotor (6) als induktive Last parallel geschalteten Freilaufdiode-(20),wobei parallel zu der Freilaufdiode (20) ein zweiter Schalter (16) vorgesehen ist, der während der Ausschaltphase des ersten Schalters (14) schließbar ist, um einen Freilaufstrom durchzuleiten, und dass die Ansteuerlogik (10) weiter so ausgebildet ist, dass sie den zweiten Schalter (16) erst nach einem Zeitintervall Δt₂ nach dem Öffnen (Ausschalten) des ersten Schalters (14) schließt und wobei die Ansteuerlogik (10) den zweiten Schalter (16) bereits ein Zeitintervall Δt₄ vor dem Schließen (Einschalten) des ersten Schalters (14) wieder öffnet, **dadurch gekennzeichnet, dass** die Ansteuerlogik (10) den zweiten Schalter (16) so rechtzeitig wieder öffnet, dass verhindert wird, dass der Freilaufstrom auf Null ab klingt.

2. Steuereinrichtung nach Anspruch 1, **dadurch gekennzeichnet, dass** das Zeitintervall Δt₂ 100 - 800 ns, insbesondere von 300 - 700 ns beträgt.

3. Steuereinrichtung nach Anspruch 1 und 2, **dadurch gekennzeichnet, dass** das Zeitintervall Δt₄ zwischen 100 ns und dem Kehrwert der Frequenz der Pulsweitenmodulation liegt.

4. Steuereinrichtung nach einem der vorstehenden Ansprüche, **dadurch gekennzeichnet, dass** der zweite Schalter (16) ein MOSFET ist.

5. Elektrowerkzeuggerät mit einem Gleichstromelektromotor (6) und mit einer Steuereinrichtung (2) nach einem oder mehreren der vorstehenden Ansprüche.

6. Verfahren zum Ansteuern eines Gleichstromelektromotors (6) bei einem Elektrowerkzeuggerät durch Pulsweitenmodulation, wobei ein Freilaufstrom während einer Abschaltphase der Ansteuerung während eines ersten Zeitintervalls Δt₂ über eine Freilaufdiode geleitet wird und während eines sich hieran anschließenden Zeitintervalls Δt₃ über einen parallel zu der Diode geschalteten elektronischen Schalter (16), der einen gegenüber der Diode (20) geringeren Widerstand aufweist, wobei der Schalter (16) bereits ein Zeitintervall Δt₄ vor der erneuten Ansteuerung wieder geöffnet wird, **dadurch gekennzeichnet, dass** der zweite Schalter (16) derart rechtzeitig wieder geöffnet wird, dass verhindert wird, dass der Freilaufstrom auf Null abklingt.

7. Verfahren nach Anspruch 6, **dadurch gekennzeichnet, dass** das Zeitintervall Δt₂ 100 - 800 ns, insbesondere von 300 - 700 ns beträgt.

## Claims

1. Control device (2) for a DC electric motor (6) of a power tool, comprising an implemented control logic (10) and a driver device (12), which are configured to carry out a pulse width modulation using a first switch (14) which controls the DC motor as an inductive load, and comprising a recovery diode (20) which is connected in parallel with the DC motor (6) as an inductive load, a second switch (16) being provided in parallel with the recovery diode (20) and being able to be closed during the off-phase of the first switch (14) in order to carry a recovery current, and the control logic (10) further being configured in such a way as to close the second switch (16) only after a time interval Δt₂ after the opening (switching off of the first switch (14), and the control logic (10) already reopening the second switch (16) at a time interval Δt₄ before the closing (switching on) of the first switch (14), **characterised in that** the control logic (10) reopens the second switch (16) in sufficiently good time that the recovery current is prevented from falling to zero.

2. Control device according to claim 1, **characterised in that** the time interval Δt₂ is 100-800 ns, in particular 300-700 ns.

3. Control device according to claim 1 and claim 2, **characterised in that** the time interval Δt₄ is between 100 ns and the reciprocal of the frequency of the pulse width modulation.

4. Control device according to any one of the preceding claims, **characterised in that** the second switch (16) is a MOSFET.

5. Power tool comprising a DC electric motor (6) and comprising a control device (2) according to one or more of the preceding claims.

6. Method for controlling a DC electric motor (6) in a power tool by means of pulse width modulation, a recovery current being conducted through a recovery diode over a first time interval Δt₂ during an off-phase of the control, and through an electronic switch (16), which is connected in parallel with the diode and has a lower resistance than the diode (20), over a subsequent time interval Δt₃, the switch (16) already being reopened at a time interval Δt₄ before the control recommences, **characterised in that** the second switch (16) is reopened in sufficiently good time that the recovery current is prevented from falling to zero.

7. Method according to claim 6, **characterised in that** the time interval Δt₂ is 100-800 ns, in particular 300-700 ns.

## Revendications

1. Dispositif de commande (2) pour un moteur électrique à courant continu (6) d'un outillage électrique, comprenant une logique de pilotage implémentée (10) et un dispositif gestionnaire (12), qui sont réalisés pour exécuter une modulation d'impulsions en largeur en utilisant un premier commutateur (14) pilotant le moteur à courant continu comme une charge inductive, et une diode de roue libre (20) connectée en parallèle au moteur électrique (6) comme une charge inductive, dans lequel, en parallèle à la diode de roue libre (20), un deuxième commutateur (16) est prévu qui peut être fermé pendant la phase hors circuit du premier commutateur (14) afin de laisser passer un courant libre, et en ce que la logique de pilotage (10) est en outre réalisée de telle sorte qu'elle ferme le deuxième commutateur (16) seulement après un intervalle de temps Δt₂ après l'ouverture (mise hors circuit) du premier commutateur (14), et dans lequel la logique de pilotage (10) ouvre de nouveau le deuxième commutateur (16) déjà à un intervalle de temps Δt₄ avant la fermeture (mise en circuit) du premier commutateur (14), **caractérisé en ce que** la logique de pilotage (10) ouvre de nouveau le deuxième commutateur (16) suffisamment à temps pour empêcher que le courant libre ne retourne à zéro.

2. Dispositif de commande selon la revendication 1, **caractérisé en ce que** l'intervalle de temps Δt₂ est de 100 à 800 ns, en particulier de 300 à 700 ns.

3. Dispositif de commande selon la revendication 1 et 2, **caractérisé en ce que** l'intervalle de temps Δt₄ se situe entre 100 ns et la valeur réciproque de la fréquence de la modulation d'impulsions en largeur.

4. Dispositif de commande selon l'une quelconque des revendications précédentes, **caractérisé en ce que** le deuxième commutateur (16) est un MOSFET.

5. Outillage électrique comprenant un moteur électrique à courant continu (6) et un dispositif de commande (2) selon l'une quelconque ou plusieurs des revendications précédentes.

6. Procédé de pilotage d'un moteur électrique à courant continu (6) pour un outillage électrique par modulation d'impulsions en largeur, dans lequel un courant libre est conduit pendant une phase hors circuit du pilotage pendant un premier intervalle de temps Δt₂ par l'intermédiaire d'une diode de roue libre et pendant un intervalle de temps Δt₃ consécutif à celui-ci par l'intermédiaire d'un commutateur électronique (16) connecté en parallèle à la diode qui présente une résistance inférieure par rapport à la diode (20), dans lequel le commutateur (16) est déjà ouvert de nouveau à un intervalle de temps Δt₄ avant le nouveau pilotage, **caractérisé en ce que** le deuxième commutateur (16) est de nouveau ouvert à temps de façon à empêcher que le courant libre ne retourne à zéro.

7. Procédé selon la revendication 6, **caractérisé en ce que** l'intervalle de temps Δt₂ est de 100 à 800 ns, en particulier de 300 à 700 ns.
